(19) Europäisches Patentamt / European Patent Office / Office européen des brevets

(11) **EP 4 629 341 A1**

(12) **EUROPEAN PATENT APPLICATION**
published in accordance with Art. 153(4) EPC

(43) Date of publication:
**08.10.2025  Bulletin 2025/41**

(21) Application number: **24840046.7**

(22) Date of filing: **08.07.2024**

(51) International Patent Classification (IPC):
$H01M\ 4/583^{(2010.01)}$     $H01M\ 4/133^{(2010.01)}$
$H01M\ 4/1393^{(2010.01)}$    $H01M\ 10/052^{(2010.01)}$
$H01M\ 4/525^{(2010.01)}$     $H01M\ 4/505^{(2010.01)}$
$H01M\ 10/0583^{(2010.01)}$   $H01M\ 4/02^{(2006.01)}$

(52) Cooperative Patent Classification (CPC):
Y02E 60/10

(86) International application number:
**PCT/KR2024/009713**

(87) International publication number:
**WO 2025/014235 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023  KR 20230089499**

(71) Applicant: **LG Energy Solution, Ltd.**
**Seoul 07335 (KR)**

(72) Inventors:
• **NOH, Suk In**
  **Daejeon 34122 (KR)**
• **LEE, Yong Ju**
  **Daejeon 34122 (KR)**

(74) Representative: **Plasseraud IP**
**104 Rue de Richelieu**
**CS92104**
**75080 Paris Cedex 02 (FR)**

(54) **ANODE FOR LITHIUM SECONDARY BATTERY, AND MANUFACTURING METHOD THEREFOR**

(57)    A negative electrode for a lithium secondary battery, a method for manufacturing the same, and a lithium secondary battery including the same. The negative electrode for a lithium secondary battery includes: a negative electrode current collector; and a negative electrode active layer including a carbon-based negative electrode active material provided on at least one side of the negative electrode current collector. The carbon-based negative electrode active material has an average aspect ratio of 0.85 or less. An optical index (O.I.) of the carbon-based negative electrode active material is 10 or less according to a following Equation 1: O.I. = $I_{004}/I_{110}$.

EP 4 629 341 A1

**Description**

[Technical Field]

The present invention relates to a negative electrode for a lithium secondary battery and a manufacturing method thereof.

This application claims the benefit of priority from Korean Patent Application No. 10-2023-0089499, filed on July 11, 2023, the disclosure of which is incorporated herein by reference in its entirety.

[Background Technology of the Invention]

In recent years, lithium secondary batteries have been widely applied not only to small devices such as portable electronic devices, but also to medium and large devices such as battery packs or power storage devices for hybrid and electric vehicles. In particular, as environmental concerns have increased in recent years, there has been a lot of research on electric vehicles and hybrid electric vehicles that can replace vehicles that use fossil fuels, such as gasoline and diesel vehicles, which are major sources of air pollution.

Conventional lithium secondary batteries are limited to short-range electric vehicles due to their limited energy density. Therefore, technology has been intensively developed to increase the energy density of lithium secondary batteries.

However, the automotive lithium secondary batteries that have been developed suffer from a long charging time after discharging as the vehicle is driven. Therefore, with the increasing supply rate of electric vehicles, there is a growing need to reduce the charging time to a level that is acceptable to the user.

Meanwhile, a lithium secondary battery is a rechargeable power generation device consisting of a laminated structure of positive electrode, separator, and negative electrode. When a lithium secondary battery is charged, a lithium deintercalation reaction is induced at the positive electrode of the battery, where lithium contained in the positive electrode active material is oxidized and released, and a lithium intercalation reaction occurs at the negative electrode, where lithium is reduced and enters the negative electrode active material. Generally, the deintercalation reaction in the positive electrode active material is faster than the intercalation reaction in the negative electrode active material, so the rapid charge and discharge performance of a lithium secondary battery is mainly determined by the negative electrode.

Materials containing graphite are widely used as the negative electrode active material of the negative electrode. The average potential when the graphite-containing material releases lithium is about 0.2 V (based on Li /Li$^+$), and the discharge potential is relatively flat. For this reason, when graphite is used as the negative electrode active material, the voltage of the secondary battery is high and has certain advantages.

The negative electrode active materials used for negative electrodes are either amorphous or crystalline carbon, and crystalline carbon is mainly used due to its high capacity. These crystalline carbons include graphitic-based carbons such as natural graphite and artificial graphite.

Different types of graphite-based carbon have different properties. For example, natural graphite is inexpensive and exhibits excellent adhesion to the current collector, but is relatively inferior in terms of high rate charge/discharge performance and life characteristics compared to artificial graphite. However, since the artificial graphite has fewer surface defects and functional groups, its adhesion to the current collector is weak, and when propylene carbonate (PC) is mixed in the electrolyte to improve low-temperature performance, the propylene carbonate causes exfoliation and destruction of each layer of the interlayer structure of the graphite.

Therefore, attempts have been made to apply mixed graphite, which is a combination of natural and artificial graphite to utilize the advantages of each, as a negative electrode active material for lithium secondary batteries. However, the adhesion of such mixed graphite to the current collector is reduced, and it is difficult to reach a satisfactory level in terms of life characteristics and impact stability.

Therefore, there is a high need for a negative electrode technology with high adhesion to the current collector, excellent lifetime characteristics, high output characteristics, and fast charging characteristics to fundamentally solve these problems.

[Related-Art Document]

Korean Patent Laid-open Publication No. 10-2022-0064389

[Description of the Invention]

[Technical Problem]

It is an object of the present disclosure to provide a negative electrode for a lithium secondary battery having excellent life characteristics, excellent output characteristics, and fast charging characteristics due to high adhesion to a current collector and the like, and a manufacturing method thereof.

[Technical Solution]

To resolve the issues described above,
the present disclosure provides a negative electrode for lithium secondary battery including:

a negative electrode current collector; and a negative electrode active layer comprising a carbon-based negative electrode active material provided on at least one side of the negative electrode current collector;

wherein the carbon-based negative electrode active material has an average aspect ratio of 0.85 or less;

wherein the negative electrode active layer has an optical index (O.I.) of a carbon-based negative electrode active material of 10 or less according to Equation 1:

$$[\text{Equation 1}]$$

$$\text{O.I.} = I_{004}/I_{110}$$

In Equation 1,

$I_{004}$ represents the area of the peak representing the (004) crystal face in the X-ray diffraction spectroscopy (XRD) measurement of the negative electrode active layer,

$I_{110}$ represents the area of the peak representing the (110) crystal face in an X-ray diffraction (XRD) measurement of the negative electrode active layer.

Here, the carbon-based negative electrode active material may have an average aspect ratio of 0.2 or more and 0.8 or less.
In addition, the negative electrode active layer may have an optical index (O.I) of a carbon-based negative electrode active material of 0.01 to 10 according to Equation 1.
Moreover, the carbon-based negative electrode active material may include at least one of natural graphite and artificial graphite.
As an example, the carbon-based negative electrode active material may be artificial graphite.
In addition, an average particle diameter ($D_{50}$) of the carbon-based negative electrode active material may be 0.01 $\mu$m to 20 $\mu$m.
Furthermore, the negative electrode active layer may have a porosity of 20% to 30%.
In addition, the negative electrode active layer may have an average thickness of 50 $\mu$m to 500 $\mu$m.
In addition, the present disclosure provides a manufacturing method of a negative electrode for lithium secondary battery of the present disclosure, the manufacturing method including:

applying a negative electrode slurry to at least one side of a negative electrode current collector;

applying a magnetic field to the applied negative electrode slurry; and
drying a negative electrode slurry applied with magnetic field to form a negative electrode active layer.

Here, the step of applying a magnetic field may be performed for a period of from 1 second to 20 seconds.
In addition, the step of applying a magnetic field may be performed with a magnetic field strength of 1,000 G to 7,000 G.
Furthermore, the present disclosure provides a lithium secondary battery including:

an electrode assembly comprising a positive electrode, the negative electrode according to the present disclosure described above, and a separator disposed between the positive electrode and the negative electrode; and

an electrolyte composition in which the electrode assembly is impregnated.

Here, the positive electrode may include a positive electrode active layer including one or more positive electrode active material among lithium metal oxide represented by Chemical Formula 1 and Chemical Formula 2 below and provided on at least one side of the positive electrode current collector:

[Chemical Formula 1] $\quad$ $Li_x[Ni_yCo_zMn_wM^1_v]O_2$

[Chemical Formula 2] $\quad$ $LiM^2_pMn_{2-p}O_4$

in Chemical Formula 1 and Chemical Formula 2,

$M^1$ is at least one element selected from W, Cu, Fe, V, Cr, Ti, Zr, Zn, Al, In, Ta, Y, La, Sr, Ga, Sc, Gd, Sm, Ca, Ce, Nb, Mg, B, or Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,

$M^2$ is Ni, Co, or Fe, and

p is $0.05 \leq p \leq 1.0$.

As an example, the positive electrode active materials may include one or more among $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, and $LiNi_{0.3}Mn_{1.7}O_4$.

Meanwhile, the electrode assembly may be a stack-type electrode assembly; a zigzag electrode assembly; or a zigzag-stack type electrode assembly.

[Advantageous Effects]

By controlling the average aspect ratio of a carbon-based negative electrode active material contained in the negative electrode active layer and the optical index (O.I) with respect to the negative electrode current collector to satisfy a predetermined range, the negative electrode for lithium secondary battery according to the present disclosure has high adhesion to the negative electrode current collector and thus has excellent life characteristics. In addition, lithium secondary batteries containing the same have excellent output characteristics and can be charged in a short time even at 1C-rate.

[Best Mode for Carrying out the Invention]

The present disclosure is subject to various modifications and can have many aspects, certain of which are described in detail below.

However, this is not intended to limit the present disclosure to any particular aspect and is to be understood to include all modifications, equivalents, or substitutions that fall within the scope of the technology of the present disclosure.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Further, in the present disclosure, "comprising as a major component" may mean comprising 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) of the defined component relative to the total weight (or total volume). For example, "comprising graphite as the major component of the negative electrode active material" may mean comprising at least 50 wt.%, at least 60 wt.%, at least 70 wt.%, at least 80 wt.%, at least 90 wt.%, or at least 95 wt.% graphite based on the total weight of the negative electrode active material, and in some cases may mean that the entire negative electrode active material is composed of graphite and comprises 100% graphite.

Further, as used herein, "carbon-based negative electrode active material is oriented" or "carbon-based negative electrode active material is aligned" means that certain crystal faces representing the two-dimensional planar structure of the carbon-based negative electrode active material comprising the negative electrode active material particles (e.g., the a-b axis crystal faces of graphite) are arranged to have a predetermined slope relative to the surface of the negative electrode current collector, which may be different from the carbon-based negative electrode active material particles themselves being arranged to have a specific orientation within the negative electrode active layer.

In addition, "highly oriented carbon-based negative electrode active material" may mean that certain crystal faces representing the two-dimensional planar structure of the carbon-based negative electrode active material contained in the negative electrode active material layer (e.g., the a-b axis crystal faces of graphite) have a high frequency of having a predetermined slope with respect to the surface of the negative electrode current collector. It may also mean, in some cases, that the crystal faces of the carbon-based negative electrode active material contained in the negative electrode active layer are arranged at a high angle (e.g., a near-vertical angle, greater than 45°; more specifically, greater than 60°) relative to the negative electrode current collector surface.

Furthermore, "high optical index of the carbon-based negative electrode active material" may refer to having a large value of the "optical index (O.I.)" referred to herein, meaning that certain crystal faces (e.g., a-b axis crystal faces of graphite) representing the two-dimensional planar structure of the carbon-based negative electrode active material contained in the negative electrode active layer are arranged at a low angle (e.g., less than 45°) relative to the surface of the negative electrode current collector. Conversely, "low optical index of the carbon-based negative electrode active material" may mean that the "optical index (O.I.)" has a small value, such that the crystal faces of the carbon-based negative electrode active material contained in the negative electrode active layer are arranged at a high angle (e.g., a near-vertical angle, greater than 45°; more specifically, greater than 60°) relative to the negative electrode current collector surface.

Furthermore, as used herein, "crystal face of a carbon-based negative electrode active material" refers to a face on which atoms of a carbon-based negative electrode active material form the shape of a crystal, which in the present disclosure may mean a crystal face comprising a plane of a carbon-based negative electrode active material, or a crystal face comprising an a-axis/b-axis/a-b-axis of a carbon-based negative electrode active material crystal.

Furthermore, as used herein, "average particle diameter ($D_{50}$)" means the particle diameter at which the sum value of the particle diameter distribution of the particles is 50%, which is also referred to as the median diameter. The average diameter may be measured using a laser diffraction particle size measurement device.

Further, as used herein, "aspect ratio" means the ratio of the longest dimension through the center of the two-dimensional particle to the shortest dimension when performing a cross-sectional structural analysis or projecting the negative electrode active material into a two-dimensional particle. Further, "average aspect ratio" means the number-weighted mean average of the aspect ratios of each particle in a population of active material particles. The aspect ratio may be determined by measuring it with a particle shape analyzer, or by measuring the shape of a two-dimensional projected particle using a scanning electron microscope (SEM), energy dispersive spectrometer, or the like, and then analyzing the measured results.

The present disclosure will be described in more detail below.

Negative electrode for lithium secondary battery

The present disclosure provides a negative electrode for lithium secondary battery, the negative electrode including:

a negative electrode current collector; and a negative electrode active layer comprising a carbon-based negative electrode active material provided on at least one side of the negative electrode current collector;

wherein the carbon-based negative electrode active material has an average aspect ratio of 0.85 or less;

wherein the negative electrode active layer has an optical index (O.I.) of a carbon-based negative electrode active material of 10 or less according to Equation 1:

[Equation 1]

$$O.I. = I_{004}/I_{110}$$

In Equation 1,

$I_{004}$ represents the area of the peak representing the (004) crystal face in the X-ray diffraction spectroscopy (XRD) measurement of the negative electrode active layer,

$I_{110}$ represents the area of the peak representing the (110) crystal face in an X-ray diffraction (XRD) measurement of the negative electrode active layer.

A negative electrode for lithium secondary battery according to the present disclosure includes a negative electrode active layer on at least one side of the negative electrode current collector. The negative electrode active layer is a layer that embodies the electrical activity of the negative electrode, and includes as a main component a negative electrode active material that embodies an electrochemical redox reaction during charging and discharging of the battery.

Here, the negative electrode active material is a carbon-based negative electrode active material, wherein the carbon-based negative electrode active material is a material having carbon atoms as its main component. Such a carbon-based negative electrode active material may include graphite. The graphite may include one or more of natural graphite and artificial graphite. In addition, graphite may further include graphitized mesophase calcined carbon (bulk mesophase) based on tar and pitch, coke (raw coke, green coke, pitch coke, needle coke, petroleum coke, etc.), etc., other than natural graphite and artificial graphite.

In one example, the negative electrode active layer according to the present disclosure may include artificial graphite exclusively. The present disclosure includes artificial graphite exclusively in the negative electrode active layer, which significantly improves the lifetime of the negative electrode, which can be advantageous in conditions where frequent charging must be withstood for a long time, such as in automotive batteries. Furthermore, compared to natural graphite, the artificial graphite has the advantage of being able to be charged at a faster rate and having superior output performance under the same C-rate conditions.

The average aspect ratio of a carbon-based negative electrode active material is one of the indicators of the shape of the particles, and depending on the shape of the carbon-based negative electrode active material, the electrical performance or adhesion of the negative electrode active layer may vary. By controlling the shape/form so that the average aspect ratio of the carbon-based negative electrode active material contained in the negative electrode active layer satisfies a predetermined range, the present disclosure can improve the adhesion between the negative electrode current collector and the negative electrode active layer while simultaneously improving the output and fast charging of the negative electrode.

Specifically, the carbon-based negative electrode active material contained in the negative electrode active layer may have an average aspect ratio of 0.85 or less. For example, the carbon-based negative electrode active material may have an average aspect ratio of 0.2 or more and 0.8 or less; 0.10 to 0.85; 0.25 to 0.85; 0.25 to 0.80; 0.25 to 0.70; 0.25 to 0.60; 0.25 to 0.50; 0.25 to 0.40; 0.40 to 0.65; 0.50 to 0.80; 0.50 to 0.65; 0.60 to 0.85; 0.60 to 0.75; 0.70 to 0.85; 0.10 to 0.40; or 0.45 to 0.75.

In the present disclosure, an average aspect ratio of 0.85 or less, more particularly 0.60 or less, may mean having the form of an ellipsoid tensioned in any one direction relative to the center of the particle. In other words, the present disclosure may include a carbon-based negative electrode active material in the negative electrode active layer in the form of an ellipsoid tensioned in any one direction. In this case, the negative electrode active layer can further shorten the migration path of lithium ions, thereby increasing the output characteristics of the negative electrode and shortening the charging time. Specifically, when the average aspect ratio of the carbon-based negative electrode active material exceeds 0.85, there is a limit where the bending degree at the negative electrode surface increases, resulting in a lower charging rate when charging the secondary battery.

Furthermore, the carbon-based negative electrode active material may have a shape that satisfies the average aspect ratio described above, and preferably has a rounded particle shape rather than a plate, sheet, flaky, needle-like shapes, or the like respectively. Here, rounded particle shape may mean particles with a cornerless shape. Such particles may be spherical or ellipsoidal in shape when cross-sectional structural analysis is performed or when projected as two-dimensional particles, and in some cases may be shapeless whose shape is difficult to define.

In one example, the carbon-based negative electrode active material may be ellipsoidal. In this case, the carbon-based negative electrode active material can be more easily secured as a migration pathway for lithium ions in the negative electrode active layer, which allows charging to be completed in a shorter time even if charging is performed under the same conditions.

Furthermore, the ellipsoid may be a graphite assembly formed from a plurality of flaky graphite. In this case, one graphite assembly may be formed by an aggregation of 2 to 100, preferably 3 to 20, pieces of flaky graphite. By controlling the shape of the carbon-based negative electrode active material as described above, the present disclosure can further increase the electrical conductivity of the negative electrode active layer, maximize the contact area with the negative electrode current collector, and improve the adhesion between the negative electrode active layer and the negative electrode current collector.

Furthermore, the carbon-based negative electrode active material may have a predetermined average particle

diameter ($D_{50}$). For example, the average particle diameter (D50) of the carbon-based negative electrode active material may be 0.1 $\mu$m to 20 $\mu$m, more specifically, 5 $\mu$m to 20 $\mu$m; 10 $\mu$m to 20 $\mu$m; 11 $\mu$m to 19 $\mu$m; 8 $\mu$m to 15 $\mu$m; 15 $\mu$m to 20 $\mu$m; 5 $\mu$m to 8 $\mu$m; 0.1 $\mu$m to 15 $\mu$m; 0.1 $\mu$m to 10 $\mu$m; 0.1 $\mu$m to 8 $\mu$m; 0.1 $\mu$m to 5 $\mu$m; 0.1 $\mu$m to 3 $\mu$m; 0.1 $\mu$m to 1 $\mu$m; 0.5 $\mu$m to 10 $\mu$m; 0.5 $\mu$m to 5 $\mu$m; 0.5 $\mu$m to 4.5 $\mu$m; 0.5 $\mu$m to 3 $\mu$m; 1 $\mu$m to 4.5 $\mu$m; 1 $\mu$m to 3 $\mu$m; or 0.8 $\mu$m to 1.8 $\mu$m.

The present disclosure can suppress the increase in electrical resistance of the negative electrode active layer in the above range. Furthermore, in the above average particle diameter range, the carbon-based negative electrode active material can increase the specific surface area while maximizing the disorderliness of the expansion direction for each of the particles so as to prevent the expansion of the particles due to charging of lithium ions, thereby further increasing the adhesion between the negative electrode active layer and the negative electrode current collector. Furthermore, the present disclosure has the advantage that the electrical conductivity of the negative electrode active layer can be increased in the above range, and at the same time, the migration path of the lithium ions can be secured.

Meanwhile, if the carbon-based negative electrode active material has a particle diameter lower than the lower limit of the average particle diameter ($D_{50}$), a large amount of binder is required due to the increase in the number of particles per unit volume, and the electrical properties of the negative electrode active layer comprising the negative electrode active material may be degraded. On the other hand, if the particle diameter is higher than the upper limit of the average particle diameter ($D_{50}$), the expansion rate of the negative electrode active material increases significantly during the charge and discharge of the secondary battery, so that the cohesion between the negative electrode active material particles and the cohesion between the negative electrode active material particles and the current collector decreases as the charge and discharge are repeated, and the cycling characteristics may be significantly reduced.

Furthermore, the carbon-based negative electrode active material may satisfy Equation 2 with a value of 0.1 to 13:

$$[\text{Equation 2}]$$

$$A*D_{50}$$

In Equation 2,

A represents the average aspect ratio of carbon-based negative electrode active materials,

$D_{50}$ represents the average particle diameter (unit: $\mu$m) of carbon-based negative electrode active materials.

The average aspect ratio and average particle diameter of the carbon-based negative electrode active material are parameters that affect the adhesion of the negative electrode active layer and the negative electrode current collector and the migration path of lithium ions in the negative electrode active layer, respectively. The smaller the values of the average aspect ratio and average particle diameter, the higher the adhesion between the negative electrode active layer and the negative electrode current collector, and thus the longer the lifetime of the negative electrode. However, if they have too small values, the resistance of the negative electrode active layer may increase, resulting in lower electrical properties. This can affect the charge and discharge capacity and output of the negative electrode.

However, the present disclosure can realize high electrical performance along with the life characteristics of the negative electrode by controlling Equation 2, which represents the correlation of the average aspect ratio and the average particle diameter of the carbon-based negative electrode active material, to be within a predetermined range. Equation 2 is a parameter indicating that the shape and size of the carbon-based negative electrode active material, which performs electrochemical redox reactions during charge and discharge, act organically and/or complementarily. By satisfying Equation 2 in a predetermined range, the present disclosure can simultaneously realize excellent life characteristics and electrical performance of the negative electrode even when either the average aspect ratio or the average particle diameter of the carbon-based negative electrode active material has a significantly lower value. Specifically, the negative electrode may satisfy Equation 2 with a value of 0.1 to 13. For example, the negative electrode may satisfy Equation 2 with 0.1 to 11; 0.1 to 10; 0.1 to 9; 0.1 to 8; 0.1 to 7; 0.1 to 5; 0.1 to 3; 0.5 to 5; 0.5 to 6.9; 0.5 to 8.9; 5 to 9; 2 to 7; 3 to 8; 1 to 8; 10 to 13; or 1 to 6.

In the negative electrode according to the present disclosure, the crystal structure characteristics of the carbon-based negative electrode active materials contained in the negative electrode active layer can be controlled to realize a fast charging rate while maintaining the adhesion between the negative electrode active layer and the negative electrode current collector.

In one example, the negative electrode active layer may have an optical index (O.I.) of 15 or less for the carbon-based negative electrode active material according to Equation 1:

[Equation 1]

$$O.I. = I_{004}/I_{110}$$

In Equation 1,

$I_{004}$ represents the area of the peak representing the (004) crystal face in the X-ray diffraction spectroscopy (XRD) measurement of the negative electrode active layer,

$I_{110}$ represents the area of the peak representing the (110) crystal face in an X-ray diffraction (XRD) measurement of the negative electrode active layer.

The optical index (O.I.) of the carbon-based negative electrode active material may be an indicator of the degree to which the ab-axis crystal face of the carbon-based negative electrode active material is oriented in a certain direction, specifically with respect to the surface of the negative electrode current collector, when measured by X-ray diffraction (XRD). Specifically, the negative electrode active layer exhibits peaks at $2\theta=26.5\pm0.2°$, $42.4\pm0.2°$, $43.4\pm0.2°$, $44.6\pm0.2°$, $54.7\pm0.2°$, and $77.5\pm0.2°$ for graphite, a carbon-based negative electrode active material, in X-ray diffraction measurements. These represent the (002), (100), (101)R, (101)H, (004), and (110) faces of graphite. The peak at $2\theta=43.4\pm0.2°$ can also be seen as an overlap of the peaks corresponding to the (101)R face of carbon-based negative electrode active materials and the (111) face of current collectors, such as copper (Cu).

Among them, the ratio of the area obtained by integrating the respective intensities of the peak at $2\theta=54.7\pm0.2°$ representing the (004) face and the peak at $2\theta=77.5\pm0.2°$ representing the (110) face can be used to measure the optical index (O.I.) of carbon-based negative electrode active materials.

Since the peak at $2\theta=54.7\pm0.2°$ is a peak representing a crystal face of the carbon-based negative electrode active material having a slope with the negative electrode current collector among the crystal face of the negative electrode active material, the above optical index (O.I.) may mean that the slope with respect to the surface of the negative electrode current collector is close to 90° when the value is close to 0, and the slope with respect to the surface of the negative electrode collector is close to 0° or 180° when the value is larger. In other words, the negative electrode active layer according to the present disclosure may be aligned such that the carbon-based negative electrode active material contained in the layer has an angle of 60° or more, 70° or more, 70-90°, 80-90°, 65-85°, or 70-85° with respect to the negative electrode current collector. Accordingly, the negative electrode active layer may have a lower optical index (O.I.) of the carbon-based negative electrode active material compared to a case where the carbon-based negative electrode active material is aligned at a lower angle of less than 60°. Here, the optical index (O.I.) refers to the degree of alignment of the ab-axis crystal faces of the carbon-based negative electrode active material. Alignment of the ab-axis crystal face of the carbon-based negative electrode active material may also induce rotation of the particles of the carbon-based negative electrode active material contained in the negative electrode active layer. However, since the rotation of the particles at this time is affected by the shape of the particles and is therefore not equivalent to the alignment of the ab-axis crystal faces, it may be difficult for the optical index (O.I.) to indicate the alignment of the particles of the carbon-based negative electrode active material.

Here, the carbon-based negative electrode active material contained in the negative electrode active layer may have the optical index (O.I.) of 10 or less, more specifically, 0.01 to 10; 0.01 to 9; 0.01 to 7; 0.01 to 5; 0.01 to 3; 1 to 9; 3 to 9; 5 to 9; 3 to 8; 4 to 7; 6 to 10; 6 to 9; 0.01 to 4; 0.1 to 2.5; 0.1 to 2.0; 0.1 to 1.5; 0.2 to 1.3; 0.4 to 1.3; 0.4 to 1.0; 0.5 to 1.3; 1.1 to 1.3; 0.5 to 0.9; or 0.4 to 0.6.

By adjusting the optical index (O.I.) of the carbon-based negative electrode active material contained in the negative electrode active layer as described above, the present disclosure is able to secure an ion migration channel in which lithium ions can migrate in a shorter distance inside the negative electrode active layer. As a result, the negative electrode of the present disclosure can prevent an increase in resistance due to a long travel distance of the lithium ions, thereby further increasing the migration speed of the lithium ions during charging and discharging, thereby simultaneously improving the fast charging performance and output performance with high safety.

Specifically, conventional fast charging of lithium secondary batteries has been applied to increase the rate by performing charging under high C-rate conditions exceeding 1C-rate in a constant current-constant voltage (CC-CV) method. In general, in CC-CV charging, the diffusion of lithium ions in the electrode during charging proceeds during the constant current (CC) charging stage, which inevitably causes concentration polarization due to prolonged diffusion. This concentration polarization of lithium ions easily causes lithium precipitation at the negative electrode, especially under high rate conditions where the amount of current (A) charged relative to the rated capacity value (Ah) of the secondary battery exceeds the standard value (i.e., the amount of current at 1C-rate: 1A), which has the limitation of significantly lowering the safety of the secondary battery. **In** addition, high-rate constant-current-constant-voltage (CC-CV) charging reaches the upper limit voltage very quickly during the constant-current (CC) charging stage, so the current may drop to a preset limit before the active material is fully consumed. This means that the charging time is significantly increased during the constant-voltage (CV) charging stage, so the reduction in the total time to charge the secondary battery is insignificant.

However, since the present disclosure can secure a shorter path of travel for lithium ions in the negative electrode active layer, the resistance induced in the negative electrode active layer during charging can be significantly reduced. This resistance reduction can lead to a longer duration of the constant current (CC) charging stage than the constant voltage (CV) charging stage in the total charging time when charging in a constant current-constant voltage (CC-CV) method. Here, the constant current (CC) charging stage has the same charging capacity per unit time because the same amount of current flows, but the constant voltage (CV) charging stage tends to reduce the current to maintain the same voltage. That is, the charging capacity per unit time is sharply reduced in the constant voltage (CV) charging stage, so that the overall charging time can be significantly reduced as the execution time of the constant current (CC) charging stage increases. Therefore, the present disclosure can increase the execution time of the constant current (CC) charging stage by controlling the optical index (O.I.) of the carbon-based negative electrode active material, thereby enabling the charging of the secondary battery to be completed in a significantly shorter time.

Furthermore, fast charging of such a secondary battery can be realized under standard value (e.g., 1C-rate) conditions rather than high-rate C-rate conditions, which has the advantage of overcoming the safety issues of lithium secondary batteries due to the concentration polarization of lithium ions induced in the negative electrode active layer during charging.

Meanwhile, the negative electrode active layer may have a porosity of 20% to 30%, and more particularly may have a porosity of 23% to 30%; 25% to 30%; 26% to 29%; or 24% to 28%.

In this case, the negative electrode active layer may exhibit a BET specific surface area of 0.62 $m^2/g$ or less, more specifically, 0.615 $m^2/g$ or less, 0.6 $m^2/g$ or less, 0.5 $m^2/g$ or less, 0.20 to 0.62 $m^2/g$, 0.30 to 0.62 $m^2/g$, 0.40 to 0.62 $m^2/g$, 0.40 to 0.60 $m^2/g$, 0.40 to 0.55 $m^2/g$, 0.40 to 0.50 $m^2/g$, or 0.58 to 0.62 $m^2/g$. Here, the specific surface area may be measured by the Brunauer-Emmett-Teller (BET) method. For example, it can be measured by the BET six-point method by the nitrogen gas adsorption distribution method using a pore distribution analyzer (Porosimetry analyzer; Bell Japan Inc, Belsorp-II mini).

By adjusting the porosity and/or BET specific surface area of the negative electrode active layer, which is located at the outermost part of the negative electrode active layer and is in direct contact with the electrolyte, to the above range, the energy density of the negative electrode can be further increased without degrading the electrolyte wettability of the negative electrode active layer.

Furthermore, the average thickness of the entire negative electrode active layer may be from 50 $\mu$m to 500 $\mu$m, more specifically from 100 $\mu$m to 400 $\mu$m; from 200 $\mu$m to 350 $\mu$m; from 50 $\mu$m to 180 $\mu$m; from 80 $\mu$m to 150 $\mu$m; from 100 $\mu$m to 250 $\mu$m; or from 130 $\mu$m to 190 $\mu$m. By adjusting the average thickness of the negative electrode active layer to the above range, the present disclosure can easily control the crystalline characteristics of each carbon-based negative electrode active material contained in the negative electrode active layer. Accordingly, the negative electrode of the present disclosure has the advantage of not only realizing high adhesion between the negative electrode active layer and the negative electrode current collector, but also enabling fast charging that can complete charging in a short time even under standard conditions (1C-rate).

Furthermore, the negative electrode active layer according to the present disclosure may optionally further include, in addition to the negative electrode active material as the main component, conductive materials, binders, other additives, etc. as required.

The conductive material may include one or more of carbon black, acetylene black, ketjen black, carbon nanotubes, carbon fiber, and the like, but is not limited thereto.

In one example, the negative electrode active layer may contain carbon black, carbon nanotubes, carbon fibers, or the like as a conductive material alone or in combination.

In this case, the content of the conductive material may be 0.1 to 10 parts by weight, and more specifically, 0.1 to 8 parts by weight, 0.1 to 5 parts by weight, 0.1 to 3 parts by weight, 2 to 6 parts by weight, or 0.5 to 2 parts by weight, for a total of 100 parts by weight of the negative electrode active layer. By controlling the content of the conductive material to the range as described above, the present disclosure can prevent the resistance of the negative electrode from increasing due to a low content of the conductive material, resulting in a decrease in the charging capacity, and the content of the negative electrode active material from decreasing due to an excessive amount of the conductive material, resulting in a decrease in the charging capacity or a decrease in the fast charging characteristic due to an increase in the loading amount of the negative electrode active layer.

Furthermore, the binder is a component that assists in the coupling of the negative electrode active material and the conductive material and the coupling to the current collector, and may be suitably applied to the extent that it does not degrade the electrical properties of the electrode, but more particularly, may include one or more among vinylidene fluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be from 0.1 to 10 parts by weight with respect to 100 parts by weight of the negative electrode active layer, and more particularly from 0.1 to 8 parts by weight, 0.1 to 5 parts by weight, 0.1 to 3 parts by weight, or 2 to 6 parts by weight. By controlling the content of the binder contained in the negative electrode active layer to the above range, the present disclosure can prevent the adhesion of the active layer from deteriorating due to a low content of binder or the electrical properties of the electrode from deteriorating due to an excess of binder.

Furthermore, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, those that are surface treated with carbon, nickel, titanium, silver, and the like can also be used. Furthermore, the average thickness of the negative electrode current collector may be suitably applied from 1 to 500 $\mu$m, considering the conductivity and total thickness of the negative electrode being manufactured.

Lithium secondary battery

Furthermore, the present disclosure provides a lithium secondary battery, the lithium secondary battery including: an electrode assembly including a positive electrode, the negative electrode of the present disclosure described above, and a separator disposed between the positive electrode and the negative electrode; and an electrolyte composition in which the electrode assembly is impregnated.

A lithium secondary battery according to the present disclosure includes an electrode assembly having a structure in which a plurality of positive electrodes and a plurality of negative electrodes are arranged alternately and a separator is positioned between them. The lithium secondary battery having the negative electrode of the present disclosure described above not only has excellent output characteristics, but also can be charged in a short time even at 1C-rate, and is therefore useful as a power source for medium and large devices such as electric vehicles.

Here, the negative electrode has the same configuration as the configuration described above, so the specific description is omitted.

Further, the positive electrode may include a positive electrode active layer including a positive electrode active material on the positive electrode current collector, the positive electrode active layer optionally further including a conductive material, a binder, other additives, and the like as required.

The positive electrode active material may include one or more of the lithium metal oxides represented by Chemical Formula 1 and Chemical Formula 2, which are capable of reacting electrochemically on the positive electrode current collector to reversibly intercalate and deintercalate lithium ions:

[Chemical Formula 1]        $Li_x[Ni_yCo_zMn_wM^1_v]O_2$

[Chemical Formula 2]        $LiM^2_pMn_qP_rO_4$

in Chemical Formula 1 and Chemical Formula 2,

$M^1$ is at least one element selected from W, Cu, Fe, V, Cr, Ti, Zr, Zn, Al, In, Ta, Y, La, Sr, Ga, Sc, Gd, Sm, Ca, Ce, Nb, Mg, B, or Mo,

x, y, z, w, and v are 1.0≤x≤1.30, 0.5≤y<1, 0<z≤0.3, 0<w≤0.3, and 0≤v≤0.1, respectively, where y+z+w+v=1,

$M^2$ is Ni, Co, or Fe,

p is 0.05≤p≤1.0,

q is 2-p and,

r is 0 or 1.

Lithium metal oxides, represented by Chemical Formula 1 and Chemical Formula 2 above, are materials containing a high content of nickel (Ni) and manganese (Mn), respectively, and when used as a positive electrode active material, have the advantage of being able to stably supply high capacity and/or high voltage electricity compared to conventionally used positive electrode active materials such as lithium iron phosphate ($LiFeO_4$).

In this case, the lithium metal oxide represented by Chemical Formula 1 may include $LiNi_{0.8}Co_{0.1}Mn_{0.1}O_2$,

$LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, and the like. Further, the lithium metal oxide represented by Chemical Formula 2 may include $LiNi_{0.7}Mn_{1.3}O_4$; $LiNi_{0.5}Mn_{1.5}O_4$; $LiNi_{0.3}Mn_{1.7}O_4$ and the like. The lithium metal oxides represented by Chemical Formula 1 and/or Chemical Formula 2 may be used alone or in combination.

Furthermore, the positive electrode active material may be included in an amount of 85 parts by weight or more with respect to the weight of the positive electrode active layer, and more specifically may be included in an amount of at least 90 parts by weight, at least 93 parts by weight, or at least 95 parts by weight.

Furthermore, the positive electrode active layer may further include a conductive material, a binder, other additives, etc. in addition to the positive electrode active material.

In this case, the conductive material used to improve the electrical performance of the positive electrode may be any of those conventionally used in the art, but may specifically include one or more of natural graphite, artificial graphite, carbon black, acetylene black, denka black, ketjen black, super-P, channel black, furnace black, lamp black, thermal black, graphene, and carbon nanotubes.

Furthermore, the conductive material may be included in an amount of 0.1 to 5 parts by weight based on 100 parts by weight of the positive electrode active layer, more specifically, may be included in an amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

Furthermore, the binder serves to bind the positive electrode active material, positive electrode additive, and conductive material to each other, and may be used without limitation as long as it has this function. Specifically, the binder may include one or more resins selected from polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Additionally, the binder may be included in an amount of 1 to 10 parts by weight based on 100 parts by weight of the positive electrode active layer, more specifically, 2 to 8 parts by weight; or 1 to 5 parts by weight.

The total thickness of the positive electrode active layer is not particularly limited, but may be from 50 μm to 300 μm, more specifically from 100 μm to 200 μm; from 80 μm to 150 μm; from 120 μm to 170 μm; from 150 μm to 300 μm; from 200 μm to 300 μm; or from 150 μm to 190 μm.

Furthermore, as a positive electrode current collector, the positive electrode may use those having a high conductivity without causing chemical changes in the battery. For example, stainless steel, aluminum, nickel, titanium, calcined carbon, and the like can be used, and in the case of aluminum or stainless steel, those that are surface treated with carbon, nickel, titanium, silver, and the like can also be used. Furthermore, the average thickness of the current collector may be suitably applied from 3 to 500 μm, considering the conductivity and total thickness of the positive electrode being manufactured.

Furthermore, the separator interposed between the positive electrode and the negative electrode of each unit cell is an insulating thin film having high ionic permeability and mechanical strength, and may use those including one or more polymers such as, but not particularly limited to, those conventionally used in the art, such as polypropylene, polyethylene, and polyethylene-propylene copolymers, which are chemically resistant and hydrophobic. The separator may take the form of a porous polymeric substrate, such as a sheet or nonwoven fabric including the polymer described above, and in some cases may take the form of a composite separator in which organic or inorganic particles are coated by an organic binder on the porous polymeric substrate. Furthermore, the separator may have an average diameter of the pores of 0.01 to 10 μm, and an average thickness of 5 to 300 μm.

Meanwhile, the lithium secondary battery according to the present disclosure may be shaped, without being particularly limited, to include a stack-type; zigzag; or zigzag-stack type electrode assembly. As one example, the lithium secondary battery according to the present disclosure may be a pouch-type secondary battery or a prismatic secondary battery.

Pouch-type and/or prismatic secondary batteries have the advantage of being highly utilizable in terms of energy density, as they can pack a high density of secondary battery unit cells within a limited space.

Furthermore, in the lithium secondary battery, the electrolyte composition may be used without limitation as long as it is conventionally applied to lithium secondary batteries.

Specifically, the electrolyte composition may include a non-aqueous organic solvent, a lithium salt, and an electrolyte additive.

Here, the non-aqueous organic solvent may be any organic solvent known in the art for use in non-aqueous electrolytes, without limitation. For example, the non-aqueous organic solvents may use aprotic organic solvents such as N-methyl-2-pyrrolidinone, ethylene carbonate (EC), propylene carbonate (PC), butylene carbonate, dimethyl carbonate (DMC), diethyl carbonate (DEC), gamma-butylolactone, 1,2-dimethoxyethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxymethane, sulfolane, methyl sulfolane, 1,3-dimethyl-2-imidazolidinone, ether, methyl pyrophosphate (MP), ethyl propionate (EP), and propyl propionate (PP).

Furthermore, the non-aqueous organic solvents utilized in the present disclosure may be used alone, or two or more may be mixed in any combination or ratio to suit the application. Among them, from the viewpoint of electrochemical stability against redox and chemical stability against heat and reaction with solutes, it is particularly preferable to mix propylene carbonate, ethylene carbonate, fluoroethylene carbonate, diethyl carbonate, dimethyl carbonate, ethyl methyl carbonate, and the like.

Furthermore, the lithium salts can be applied without limitation to any non-aqueous electrolyte known in the art. Specifically, the lithium salts may include one or more of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, and $(FSO_2)_2NLi$.

The lower limit of the suitable concentration range for proper use of the lithium salt is 0.5 mol/L or more, more particularly 0.7 mol/L or more, more particularly 0.9 mol/L or more, and the upper limit is 2.5 mol/L or less, more particularly 2.0 mol/L or less, more particularly 1.5 mol/L or less. When the concentration of lithium salt is lower than 0.5 mol/L, there is a possibility that the cycle characteristics and output characteristics of the non-aqueous electrolyte battery may be degraded due to a decrease in ionic conductivity. In addition, if the concentration of lithium salt exceeds 2.5 mol/L, the viscosity of the electrolyte for non-aqueous electrolyte battery increases, which may also reduce the ionic conductivity and may reduce the cycle characteristics and output characteristics of non-aqueous electrolyte battery.

In addition, when a large amount of lithium salt is dissolved in a non-aqueous organic solvent at one time, the temperature of the electrolyte may increase due to the heat of dissolution of the lithium salt. In the case of lithium salts containing fluorine, if the temperature of the non-aqueous organic solvent rises significantly due to the heat of dissolution of the lithium salt, it may accelerate decomposition and produce hydrogen fluoride (HF). Hydrogen fluoride (HF) is undesirable because it causes battery performance degradation. Therefore, the temperature of dissolving the lithium salt in the non-aqueous organic solvent is not particularly limited, but may be controlled between -20 and 80°C, and more particularly between 0 and 60°C.

Furthermore, the electrolyte additive may be included as additional auxiliary components to improve the properties of the electrolyte composition. Electrolyte additives commonly utilized in non-aqueous electrolytes of the present disclosure may be added in any proportion. Specifically, compounds having an overcharge prevention effect, a negative electrode film forming effect, a positive electrode protection effect, such as cyclohexylbenzene, biphenyl, t-butylbenzene, carbonate, vinyl ethylene carbonate, difluoroanisole, fluoroethylene carbonate, propanesultone, succinonitrile, dimethylvinylene carbonate, and the like may be used.

In addition, it is possible to use electrolyte solutions for non-aqueous electrolyte batteries, such as those used in non-aqueous electrolyte batteries called lithium polymer cells, by gelling agents or cross-linking polymers.

The lithium secondary battery according to the present disclosure has the advantage of having the above-described configuration, which not only provides the battery with excellent output characteristics, but also allows it to be recharged in a short time, even at 1C-rate.

Manufacturing method of a negative electrode

In addition, in an exemplary aspect, the present disclosure provides a manufacturing method of a negative electrode for lithium secondary battery of the present disclosure, the manufacturing method including:

applying a negative electrode slurry to at least one side of a negative electrode current collector;

applying a magnetic field to the applied negative electrode slurry; and

drying a negative electrode slurry applied with magnetic field to form a negative electrode active layer.

A method of manufacturing a negative electrode according to the present disclosure means a method of manufacturing the negative electrode of the present disclosure as described above. The method of manufacturing the negative electrode can produce a negative electrode having a negative electrode active layer having a controlled crystal characteristic of the negative electrode active material by applying a negative electrode slurry on the negative electrode current collector, applying a magnetic field to the surface of the applied negative electrode slurry, and drying the negative electrode slurry.

Here, the step of applying the negative electrode slurry includes coating the surface of the moving negative electrode current collector by discharging a negative electrode slurry containing a carbon-based negative electrode active material. This step may be applied in any manner conventionally practiced in the art without limitation, but preferably utilizes a die coating method. The die coating method may be performed by means of a slot die having a shim for controlling the discharge conditions of the negative electrode slurry. In this case, by controlling the shape, position, etc. of the shim, the loading amount, application thickness, etc. of the negative electrode slurry applied to the negative electrode current collector can be easily controlled.

Meanwhile, the step of applying a magnetic field to the negative electrode slurry may be a step of controlling the crystal properties of the negative electrode active material contained in the negative electrode slurry. Specifically, the step may apply a magnetic field to a surface of the negative electrode slurry applied on the negative electrode current collector to align the a-b axis crystal faces of the carbon-based negative electrode active material contained in the negative electrode slurry at a high angle with respect to the negative electrode current collector.

In this case, the magnetic field application may be applied by magnetic parts disposed on the upper and lower parts of the negative electrode current collector, which is moved with a negative electrode slurry applied to its surface. The polarity of the upper and lower magnetic parts may be different.

Furthermore, the optical index (O.I.) of the carbon-based negative electrode active material contained in the negative electrode slurry can be controlled by the applied magnetic field strength, the applied time, and the like, so that the step of applying the magnetic field can be performed under a predetermined magnetic field strength condition.

Specifically, the step of applying the magnetic field may include applying a magnetic field of 10,000 G (Gauss) or less, more specifically, 1,000 G to 7,000 G; 2,000 G to 6,000 G; 1,500G to 5,000G; 1,500G to 4,500G; 4,000G to 7,000G; 2,000G to 4,000G; 2,500G to 3,500G; 3,000G to 6,500G; or 2,700G to 3,300G.

Further, the step of applying the magnetic field may be performed for a period of 1 to 20 seconds, more specifically, for a period of 1 to 15 seconds; 1 to 10 seconds; 5 to 20 seconds; 10 to 20 seconds; 11 to 18 seconds; 1 to 5 seconds; 7 to 13 seconds; or 6 to 11 seconds.

In one example, the step of applying the magnetic field may include applying a magnetic field of $3,000 \pm 50$ G to the negative electrode slurry for 9 to 11 seconds.

Further, the step of applying the magnetic field may be performed by magnetic parts introduced on the upper and lower parts of the applied negative electrode slurry, as mentioned above, but the size of the magnetic parts may be adjusted to be larger than the size of the negative electrode slurry so that the magnetic field applied to the negative electrode slurry can be applied uniformly over the entire surface of the negative electrode slurry. For example, the magnetic part may have a length ratio of 105% to 200% based on the length in the width direction of the negative electrode slurry, more specifically, it may have a length ratio of 110% to 180%; 110% to 160%; 110% to 140%; 110% to 130%; 130% to 150%; or 105% to 120% based on the length in the width direction of the negative electrode slurry.

In the step of applying a magnetic field, the present disclosure can uniformly realize the optical index (O.I.) of the carbon-based negative electrode active material contained in the negative electrode slurry to satisfy a predetermined range by controlling the magnetic field strength, application time, and/or magnetic part size as described above.

Further, the step of forming the negative electrode active layer may include the steps of drying the negative electrode slurry; and rolling the dried negative electrode slurry.

In this case, the step of drying the negative electrode slurry may be applied without limitation as long as it is a manner that is capable of maintaining the orientation of the carbon-based negative electrode active material contained within the negative electrode active layer.

For example, the drying step may be performed by applying heat energy to the negative electrode slurry using a hot air dryer, a vacuum oven, or the like to dry the negative electrode slurry.

Further, the step of rolling the dried negative electrode slurry is a step of increasing the density of the negative electrode active layer by applying pressure to the dried negative electrode slurry using a roll press or the like. In this case, the rolling may be performed at a temperature condition higher than room temperature.

Specifically, the rolling may be performed at a temperature of 50°C to 100°C, more specifically at a temperature of 60°C to 100°C; 75°C to 100°C; 85°C to 100°C; 50°C to 90°C; 60°C to 80°C; or 65°C to 90°C. More specifically, the rolling may be performed at a rolling speed of 2 m/s to 7 m/s, or more specifically, 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s. Furthermore, the rolling may be performed under a pressure condition of 50 MPa to 200 MPa, more specifically, under a pressure condition of 50 MPa to 150 MPa; 50 MPa to 100 MPa; 100 MPa to 200 MPa; 150 MPa to 200 MPa; or 80 MPa to 140 MPa.

By performing the rolling of the dried negative electrode slurry under the above temperature, speed and/or pressure conditions, the present disclosure can increase the energy density of the negative electrode while minimizing the change in the alignment of the carbon-based negative electrode active material contained in the negative electrode active layer formed.

Hereinafter, the present disclosure will be described in more detail by way of Examples and Experimental Examples.

However, the following Examples and Experimental Examples are only illustrative of the present disclosure, and the disclosure is not limited to the following Examples and Experimental Examples.

**Examples 1-8 and Comparative Examples 1-3. Preparation of a negative electrode for a lithium secondary battery**

As a carbon-based negative electrode active material, an artificial graphite with a secondary particle shape by assembling flaky primary particles was prepared. In addition, carbon black as a conductive material and carboxymethylcellulose (CMC) and styrene butadiene rubber (SBR) as binders were prepared. The average particle diameter ($D_{50}$) of the carbon-based negative electrode active material was measured by laser diffraction scattering particle size distribution measurement. The results are shown in Table 1 below.

The negative electrode slurry was then prepared by mixing 96 parts by weight of artificial graphite, 1.5 parts by weight of carboxymethylcellulose (CMC), and 2.5 parts by weight of styrene butadiene rubber (SBR) with water to achieve 50% solids.

Once the negative electrode slurry was prepared, it was cast onto a copper thin plate (thickness: 10 $\mu$m) under roll-to-roll transfer (transfer speed: 5 m/min) using a single die coater.

Permanent magnets with a length ratio of 110 to 120% with respect to the length in the width direction of the negative electrode slurry were placed at the upper part of the applied negative electrode slurry and at the lower part of the negative electrode current collector, and a magnetic field was applied with a field strength of 3,000$\pm$20 G. The time of magnetic field application is shown in Table 1. The magnetized negative electrode slurry was hot air dried to form a negative electrode in the form of a negative electrode active layer stacked on the negative electrode current collector. The formed negative electrode active layer was rolled at a pressure of 100-150 MPa and a transfer rate of 3 m/s at 50$\pm$1°C to prepare negative electrodes for lithium secondary batteries (average thickness of negative electrode active layer: 190$\pm$5 $\mu$m, loading amount: 5-20 mg/cm$^2$).

For each prepared negative electrode, scanning electron microscopy (SEM) analysis of the negative electrode active layer cross-section was performed to obtain spectroscopic images. The obtained images were analyzed to calculate the average aspect ratio of the artificial graphite contained in the negative electrode active layer. This average aspect ratio is the ratio of the shortest dimension to the longest dimension through the center of the artificial graphite particles. The results are shown in Table 1 below.

In addition, for each prepared negative electrode, X-ray diffraction spectroscopy (XRD) of the negative electrode active layer was performed to measure the spectrum. The measurement conditions for X-ray diffraction (XRD) were as follows:

- Target: Cu (K$\alpha$ ray) graphite monochromators

- Slit: Divergence slit = 1 degree, Reception slit = 0.1 mm, Scattering slit = 1 degree

- Measurement area: (110) face: 76.5°<2$\theta$<78.5° / (004) face: 53.5°<2$\theta$<56.0°.

From the spectra measured under the above conditions, the average optical index (O.I.) of the carbon-based active materials in each negative electrode active layer was calculated using Equation 1. The results are shown in Table 1:

[Equation 1]

$$O.I. = I_{004}/I_{110}$$

In Equation 1,
$I_{004}$ represents the area of the peak representing the (004) crystal face in the X-ray diffraction spectroscopy (XRD) measurement of the negative electrode active layer,
$I_{110}$ represents the area of the peak representing the (110) crystal face in an X-ray diffraction (XRD) measurement of the negative electrode active layer.

[Table 1]

| | | Magnetic field application conditions | | Carbon-based negative electrode active materials | | O.I. of the negative electrode active layer |
|---|---|---|---|---|---|---|
| | | Applied or not | Time [seconds] | Average aspect ratio | Average particle diameter ($D_{50}$) | |
| | Example 1 | O | 9~11 | 0.30 | 15.5$\pm$0.2 $\mu$m | 7 |
| | Example 2 | O | 9~11 | 0.55 | 15.5$\pm$0.2 $\mu$m | 7 |
| | Example 3 | O | 9~11 | 0.78 | 15.5$\pm$0.2 $\mu$m | 7 |
| | Example 4 | O | 9~11 | 0.55 | 1.5$\pm$0.1 $\mu$m | 8 |

(continued)

| | Magnetic field application conditions | | Carbon-based negative electrode active materials | | O.I. of the negative electrode active layer |
|---|---|---|---|---|---|
| | Applied or not | Time [seconds] | Average aspect ratio | Average particle diameter ($D_{50}$) | |
| Example 5 | O | 9~11 | 0.55 | 5.0±0.2 µm | 8 |
| Example 6 | O | 9~11 | 0.55 | 8.5±0.2 µm | 8 |
| Example 7 | O | 9~11 | 0.55 | 12.5±0.2 µm | 7 |
| Example 8 | O | 9~11 | 0.55 | 22.0±0.2 µm | 7 |
| Comparative Example 1 | O | 1~2 | 0.55 | 15.5±0.2 µm | 16 |
| Comparative Example 2 | X | 0 | 0.55 | 15.5±0.2 µm | 23 |
| Comparative Example 3 | O | 9~11 | 0.95 | 15.5±0.2 µm | 10 |

**Comparative Example 4-5. Preparation of a negative electrode for a lithium secondary battery**

The negative electrode for the lithium secondary battery was prepared by performing the same method as in Example 2, except that natural graphite having an ellipsoidal shape or artificial graphite having a flaky shape was used as the carbon-based negative electrode active material.

For prepared negative electrodes, ① scanning electron microscopy (SEM) analysis of the negative electrode active layer cross-section was performed to calculate the average aspect ratio of the carbon-based negative electrode active material contained in the negative electrode active layer. In addition, ② X-ray diffraction (XRD) of the negative electrode active layer was performed to obtain the optical index (O.I.) of the carbon-based negative electrode active material. The results are shown in Table 2 below.

[Table 2]

| | Carbon-based negative electrode active materials | | | O.I. of the negative electrode active layer |
|---|---|---|---|---|
| | Type | Average aspect ratio | Average particle diameter ($D_{50}$) | |
| Comparative Example 4 | Natural Graphite | 0.55 | 15.5±0.2 µm | 12 |
| Comparative Example 5 | Artificial Graphite | 0.55 | 15.5±0.2 µm | 11 |

**Examples 9-16 and Comparative Examples 6-10. Preparation of lithium secondary battery**

LiNi$_{0.7}$Co$_{0.1}$Mn$_{0.1}$Al$_{0.1}$O$_2$ with a particle size of 5 µm was prepared as a positive electrode active material, and mixed with a carbon-based conductive material and polyvinylidene fluoride as a binder in a weight ratio of 94:3:3 in N-methyl pyrrolidone (NMP) to form a slurry, cast on an aluminum thin plate, dried in a vacuum oven at 120°C, and rolled to prepare the positive electrode.

A 1 Ah class lithium secondary battery was assembled by interposing an 18 µm polypropylene separator between the positive electrode obtained above and the negative electrode prepared in Examples 1-8 and Comparative Examples 1-5, respectively, inserting it into the case, and then injecting an electrolyte composition.

Here, the type of negative electrode applied to each lithium secondary battery is shown in Table 3 below.

[Table 3]

| | Types of negative electrode applied |
|---|---|
| Example 9 | Negative electrode prepared in Example 1 |
| Example 10 | Negative electrode prepared in Example 2 |
| Example 11 | Negative electrode prepared in Example 3 |
| Example 12 | Negative electrode prepared in Example 4 |

(continued)

| | Types of negative electrode applied |
|---|---|
| Example 13 | Negative electrode prepared in Example 5 |
| Example 14 | Negative electrode prepared in Example 6 |
| Example 15 | Negative electrode prepared in Example 7 |
| Example 16 | Negative electrode prepared in Example 8 |
| Comparative Example 6 | Negative electrode prepared in Comparative Example 1 |
| Comparative Example 7 | Negative electrode prepared in Comparative Example 2 |
| Comparative Example 8 | Negative electrode prepared in Comparative Example 3 |
| Comparative Example 9 | Negative electrode prepared in Comparative Example 4 |
| Comparative Example 10 | Negative electrode prepared in Comparative Example 5 |

**Experimental Examples.**

To evaluate the performance of the negative electrodes according to the present disclosure, the following experiments were performed on each negative electrode and lithium secondary battery manufactured in the Examples and Comparative Examples.

1) Evaluating adhesion to the negative electrode current collector

Specimens were prepared by cutting the negative electrodes prepared in Examples 1-8 and Comparative Examples 1-5, respectively, so that the transverse and longitudinal lengths were 25 mm and 70 mm, respectively. Double-sided tape was used to attach the prepared specimens to a glass plate, which was arranged so that the current collector faced the glass plate. After fixing the specimen on the glass plate in the tensile tester, the negative electrode active layer of each negative electrode was pulled off at a speed of 100 mm/min at 25°C to form an angle of 90° with the negative electrode current collector. The peel force measured in real time was defined as the interfacial adhesion between the negative electrode current collector and the negative electrode active layer, and the measured results are shown in Table 4 below.

2) Evaluating 1C-rate fast charging

Each of the lithium secondary batteries prepared in Examples 9-16 and Comparative Examples 6-10 was activated by charging at 25 °C at a rate of 0.3 C to 4.2 V under CC-CV conditions and discharging at a rate of 0.3 C to 2.5 V under CC conditions.

Each activated lithium secondary battery was charged in a constant current-constant voltage (CC-CV) manner at a temperature of 25°C, and the time required for the state of charge (SOC) to reach 80% was measured. The charging consisted of a constant current (CC) charge at a current rate of 1.0 C-rate until the voltage reaches 4.2 V, followed by a constant voltage (CV) charge that maintains 4.2 V and cuts off when the current reaches 0.005 C-rate. The measured charging times are shown in Table 4 below.

[Table 4]

| | | Types of negative electrode | Adhesion | Charging time (SOC 80%) |
|---|---|---|---|---|
| | Example 9 | Negative electrode prepared in Example 1 | 34 gf/cm | 11 seconds |
| | Example 10 | Negative electrode prepared in Example 2 | 33 gf/cm | 16 seconds |
| | Example 11 | Negative electrode prepared in Example 3 | 34 gf/cm | 19 seconds |
| | Example 12 | Negative electrode prepared in Example 4 | 39 gf/cm | 12 seconds |
| | Example 13 | Negative electrode prepared in Example 5 | 38 gf/cm | 12 seconds |
| | Example 14 | Negative electrode prepared in Example 6 | 37 gf/cm | 11 seconds |
| | Example 15 | Negative electrode prepared in Example 7 | 35 gf/cm | 11 seconds |

(continued)

|  | Types of negative electrode | Adhesion | Charging time (SOC 80%) |
|---|---|---|---|
| Example 16 | Negative electrode prepared in Example 8 | 31 gf/cm | 21 seconds |
| Comparative Example 6 | Negative electrode prepared in Comparative Example 1 | 25 gf/cm | 28 seconds |
| Comparative Example 7 | Negative electrode prepared in Comparative Example 2 | 28 gf/cm | 51 seconds |
| Comparative Example 8 | Negative electrode prepared in Comparative Example 3 | 30 gf/cm | 24 seconds |
| Comparative Example 9 | Negative electrode prepared in Comparative Example 4 | 29 gf/cm | 32 seconds |
| Comparative Example 10 | Negative electrode prepared in Comparative Example 5 | 14 gf/cm | 22 seconds |

As shown in Table 4 above, it can be seen that the negative electrode for a lithium secondary battery according to the present disclosure not only has excellent adhesion between the negative electrode active layer and the negative electrode current collector, but also completes charging at a fast rate under 1C-rate conditions.

Specifically, the negative electrodes of the Examples exhibited high adhesion of the negative electrode active layer to the negative electrode current collector of 31 gf/cm or more (more specifically, 33 gf/cm or more). Furthermore, the secondary batteries of the Examples including these negative electrodes reached 80% state of charge (SOC) in a short time of 21 seconds or less (more specifically, less than 20 seconds) under standard constant current-constant voltage (CC-CV) charging conditions at 1 C-rate.

In contrast, the negative electrodes of the Comparative Examples exhibited low adhesion between the negative electrode active layer and the negative electrode current collector, less than or equal to 30 gf/cm. However, the negative electrode of Comparative Example 4 had an adhesion of 30 gf/cm between the negative electrode active layer and the negative electrode current collector, and the secondary battery including it was found to require more than 22 seconds to reach 80% state of charge (SOC).

This means that by controlling the average aspect ratio and optical index (O.I) of the carbon-based negative electrode active materials in the negative electrode active layer, the adhesion of the negative electrode current collector to the negative electrode active layer and the charge rate at standard C-rate conditions can be improved.

From these results, it can be seen that the negative electrode for the lithium secondary battery according to the present disclosure has excellent life characteristics due to its high adhesion to the negative electrode current collector, and that the lithium secondary battery including it has excellent output characteristics and can be charged in a short time even at 1C-rate.

While the foregoing has been described with reference to preferred aspects of the disclosure, it will be appreciated by those skilled in the art or having ordinary knowledge of the art that various modifications and changes can be made to the disclosure without departing from the technical field of the disclosure as described in the patent claims that follow.

Thus, the technical scope of the present disclosure is not limited to what is disclosed in the detailed description of the specification, but should be defined by the claims of the patent.

**Claims**

1. A negative electrode for a lithium secondary battery comprising:

   a negative electrode current collector; and a negative electrode active layer including a carbon-based negative electrode active material provided on at least one side of the negative electrode current collector;
   wherein the carbon-based negative electrode active material has an average aspect ratio of 0.85 or less; and
   wherein the negative electrode active layer has an optical index (O.I.) of 10 or less according to a following Equation 1:

$$[\text{Equation 1}]$$

$$\text{O.I.} = I_{004}/I_{110}$$

   In Equation 1,

$I_{004}$ represents an area of a peak representing a (004) crystal face of the carbon-based negative electrode active material in an X-ray diffraction spectroscopy (XRD) measurement of the negative electrode active layer; and

$I_{110}$ represents an area of a peak representing a (110) crystal face of the carbon-based negative electrode active material in an X-ray diffraction (XRD) measurement of the negative electrode active layer.

2. The negative electrode for a lithium secondary battery of claim 1, wherein the average aspect ratio of the carbon-based negative electrode active material is 0.2 or more and 0.8 or less.

3. The negative electrode for lithium secondary battery of claim 1, wherein the optical index (O.I.) of the negative electrode active material layer is from 0.01 to 10 according to Equation 1.

4. The negative electrode for a lithium secondary battery of claim 1, wherein the carbon-based negative electrode active material includes at least one of natural graphite or artificial graphite.

5. The negative electrode for a lithium secondary battery of claim 1, wherein the carbon-based negative electrode active material is artificial graphite.

6. The negative electrode for a lithium secondary battery of claim 1, wherein an average particle diameter ($D_{50}$) of the carbon-based negative electrode active material ranges from 0.01 $\mu$m to 20 $\mu$m.

7. The negative electrode for a lithium secondary battery of claim 1, wherein the negative electrode active layer has a porosity of from 20% to 30%.

8. The negative electrode for a lithium secondary battery of claim 1, wherein the negative electrode active layer has an average thickness of from 50 $\mu$m to 500 $\mu$m.

9. A manufacturing method of a negative electrode for a lithium secondary battery according to claim 1, the manufacturing method comprising:

applying a negative electrode slurry to at least one side of the negative electrode current collector;
applying a magnetic field to the negative electrode slurry applied to at least one side of the negative electrode current collector; and
after applying the magnetic field, drying the negative electrode slurry applied to at least one side of the negative electrode current collector to form the negative electrode active layer.

10. The manufacturing method of a negative electrode for a lithium secondary battery of claim 9, wherein applying the magnetic field is performed for a period of from 1 second to 20 seconds.

11. The manufacturing method of a negative electrode for a lithium secondary battery of claim 9, wherein applying the magnetic field is performed with a magnetic field strength of from 1,000 G to 7,000 G.

12. A lithium secondary battery comprising:

an electrode assembly including a positive electrode, the negative electrode according to claim 1, and a separator disposed between the positive electrode and the negative electrode; and
an electrolyte composition in which the electrode assembly is impregnated.

13. The lithium secondary battery of claim 12, wherein the positive electrode includes a positive electrode active layer provided on at least one side of a positive electrode current collector, wherein the positive electrode active layer includes one or more positive electrode active materials represented by a following Chemical Formula 1 or a following Chemical Formula 2:

[Chemical Formula 1]    $Li_x[Ni_yCo_zMn_wM^1_v]O_2$

[Chemical Formula 2]    $LiM^2_pMn_{2-p}O_4$

in Chemical Formula 1 and Chemical Formula 2,

M$^1$ is at least one element selected from W, Cu, Fe, V, Cr, Ti, Zr, Zn, Al, In, Ta, Y, La, Sr, Ga, Sc, Gd, Sm, Ca, Ce, Nb, Mg, B, or Mo;

$1.0 \leq x \leq 1.30$, $0.5 \leq y < 1$, $0 < z \leq 0.3$, $0 < w \leq 0.3$, and $0 \leq v \leq 0.1$, and $y+z+w+v=1$;

M$^2$ is Ni, Co, or Fe; and

p is $0.05 \leq p \leq 1.0$.

14. The lithium secondary battery of claim 13, wherein the positive electrode active material includes one or more of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, or $LiNi_{0.3}Mn_{1.7}O_4$.

15. The lithium secondary battery of claim 12, wherein the electrode assembly is a stack-type electrode assembly; a zigzag electrode assembly; or a zigzag-stack type electrode assembly.

**INTERNATIONAL SEARCH REPORT**

| International application No. |
| --- |
| **PCT/KR2024/009713** |

| A. | CLASSIFICATION OF SUBJECT MATTER |
| --- | --- |

**H01M 4/583**(2010.01)i; **H01M 4/133**(2010.01)i; **H01M 4/1393**(2010.01)i; **H01M 10/052**(2010.01)i; **H01M 4/525**(2010.01)i; **H01M 4/505**(2010.01)i; **H01M 10/0583**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/583(2010.01); C01B 32/20(2017.01); H01M 10/0587(2010.01); H01M 4/133(2010.01); H01M 4/1393(2010.01); H01M 50/249(2021.01); H01M 50/258(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 탄소계 활물질(carbon based active material), 종횡비(aspect ratio), 정렬도(orientation index, O.I), 자기장(magnetic field)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2544496 B1 (LG ENERGY SOLUTION, LTD.) 20 June 2023 (2023-06-20)<br>See claims 1, 3-7 and 9-11; paragraphs [0069], [0072], [0119], [0121]-[0136], [0146] and [0190]; and table 1, example 1. | 1-15 |
| A | CN 113036298 A (CONTEMPORARY AMPEREX TECHNOLOGY CO., LTD.) 25 June 2021 (2021-06-25)<br>See claims 1-11; and paragraphs [0076]-[0080], [0086], [0091] and [0100]. | 1-15 |
| A | KR 10-2536147 B1 (LG ENERGY SOLUTION, LTD.) 26 May 2023 (2023-05-26)<br>See claims 1 and 4-11; and paragraphs [0076]-[0078]. | 1-15 |
| DA | KR 10-2022-0064389 A (CONTEMPORARY AMPEREX TECHNOLOGY CO., LIMITED) 18 May 2022 (2022-05-18)<br>See claims 1 and 4-11; and paragraphs [0077]-[0080]. | 1-15 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 October 2024** | **27 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/009713** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2013-069432 A (TOYOTA MOTOR CORP.) 18 April 2013 (2013-04-18)<br>  See claims 1-7. | 1-15 |

Form PCT/ISA/210 (second sheet) (July 2022)

## INTERNATIONAL SEARCH REPORT
### Information on patent family members

| International application No. |
| --- |
| **PCT/KR2024/009713** |

| Patent document cited in search report | | | Publication date (day/month/year) | Patent family member(s) | | | Publication date (day/month/year) |
| --- | --- | --- | --- | --- | --- | --- | --- |
| KR | 10-2544496 | B1 | 20 June 2023 | CN | 118541828 | A | 23 August 2024 |
| | | | | EP | 4447164 | A1 | 16 October 2024 |
| | | | | WO | 2024-136079 | A1 | 27 June 2024 |
| CN | 113036298 | A | 25 June 2021 | CN | 113036298 | B | 11 February 2022 |
| KR | 10-2536147 | B1 | 26 May 2023 | WO | 2024-111906 | A1 | 30 May 2024 |
| KR | 10-2022-0064389 | A | 18 May 2022 | CN | 113228341 | A | 06 August 2021 |
| | | | | CN | 113228341 | B | 23 June 2023 |
| | | | | EP | 3859827 | A1 | 04 August 2021 |
| | | | | EP | 3859827 | A4 | 11 August 2021 |
| | | | | EP | 3859827 | B1 | 17 August 2022 |
| | | | | JP | 2022-540521 | A | 15 September 2022 |
| | | | | JP | 7222147 | B2 | 14 February 2023 |
| | | | | KR | 10-2529777 | B1 | 09 May 2023 |
| | | | | US | 11961993 | B2 | 16 April 2024 |
| | | | | US | 2021-0336244 | A1 | 28 October 2021 |
| | | | | WO | 2021-109133 | A1 | 10 June 2021 |
| JP | 2013-069432 | A | 18 April 2013 | None | | | |

**EP 4 629 341 A1**

**REFERENCES CITED IN THE DESCRIPTION**

**Patent documents cited in the description**

- KR 1020230089499
- KR 1020220064389